# FASCICULE DE BREVET EUROPEEN

(11) **EP 2 159 901 B1**
(45) Date de publication et mention de la délivrance du brevet: **12.08.2015**
(21) Numéro de dépôt: 09164864.2
(22) Date de dépôt: 08.07.2009
(51) Int. Cl.: H02J 7/16

(54) **Procédé de protection d'une source de stockage d'énergie, notamment une batterie d'un véhicule automobile**
Schutzverfahren für eine elektrische Energiespeicherquelle, insbesondere eine Kraftfahrzeugbatterie
Protection method for an electric energy storage source, in particular a motor vehicle battery

(30) Priorité: 26.08.2008 FR 0855734
(43) Date de publication de la demande: 03.03.2010
(73) Titulaire: VALEO EQUIPEMENTS ELECTRIQUES MOTEUR, 94046 Créteil Cedex (FR)
(72) Inventeur: Tisserand, Pierre, 94450 Limeil-Brévannes (FR); Chassard, Pierre, 94000 Créteil (FR); Gendron, Vincent, 94100 Saint-Maur-des-Fossés (FR)
(74) Mandataire: de Lambilly Delorme, Marie Pierre

(56) Documents cités:
- EP-A- 0 849 855

## Description

L'invention concerne notamment un procédé de protection d'une source de stockage d'énergie, notamment une batterie d'un véhicule automobile.

Le brevet EP 920 722 B1 décrit un système de régulation d'un générateur sur un véhicule automobile.

Il est connu d'imposer à une machine électrique tournante telle qu'un alternateur, un mode de fonctionnement choisi parmi une pluralité de modes prédéterminés.

Ces modes sont imposés par une machine d'états et correspondent par exemple aux modes suivants :
- Mode d'arrêt appelé mode STAND_BY dans lequel l'excitation du rotor est maintenue, en termes de rapport cyclique, à 0%,
- Mode de temporisation appelé mode TIMER dans lequel l'excitation est coupée pendant un temps prédéterminé, par exemple pendant 5 secondes, au démarrage,
- Mode de pré-excitation appelé PRE_EXC du rotor pendant lequel le rapport cyclique est maintenu à environ 12.5% par exemple ( un but de ce mode est de magnétiser le rotor afin de pouvoir mesurer la fréquence de phase avant le mode normal de régulation, dès la rotation),
- Mode de réponse progressive appelé mode LRC pendant lequel le rapport cyclique varie entre 0 et 100%,
- Mode normal de régulation appelé mode NORMAL pendant lequel le rapport cyclique varie en fonction de la charge de la batterie notamment,
- Mode de régulation de phase.

L'alternateur est généralement connecté à un régulateur de tension et à une batterie, de manière connue en soi.

Un ou plusieurs capteurs de vitesse de rotation du rotor de l'alternateur peuvent être prévus et une ou plusieurs vis de phase (cette vis permettant une connexion mécanique et une liaison électrique entre des phases du stator et le régulateur) permettent au régulateur de tension de disposer d'une information représentative de cette vitesse de rotation.

Ceci peut permettre de commencer à générer du courant de sortie de l'alternateur au-dessus d'une certaine vitesse, par exemple de 800 tours/minute.

Dans le cas d'une déconnexion accidentelle de la vis de phase sur le véhicule, le régulateur peut être privé de la possibilité de disposer de l'information sur la vitesse de rotation de l'alternateur et ce régulateur, lorsqu'il fonctionne en mode de pré-excitation PRE_EXC, peut rester bloquer en fonctionnement dans ce mode de pré-excitation.

Cette situation peut devenir dangereuse par surcharge possible de la batterie entraînant une surtension sur le réseau de bord du véhicule, dans le cas où l'alternateur fonctionne de manière prolongée dans le mode pré-excitation (notamment en dépit d'une alerte donnée par exemple par une lampe, le conducteur du véhicule ignorant cette alerte).

Le document EP 0849855 A1 décrit un procédé pour la gestion de l'excitation d'un alternateur de véhicule automobile par un régulateur. Ce procédé comprend trois blocs d'étapes. Un premier bloc d'étapes consiste à fournir un signal de préexcitation à 12,5%, mesurer le PWM et si le PWM est inférieure à 15%, le procédé passe à un deuxième bloc d'étapes sinon il passe à un troisième bloc d'étapes. Le deuxième bloc d'étapes comprend des étapes consistant à mesurer la tension de la batterie et comparer cette tension à une tension interne de référence pour commander un réduction ou une conservation du rapport cyclique du signal de préexcitation. Si la tension mesurée est supérieure ou égale à la tension interne de référence le deuxième bloc comprend une étape consistant à réduire le rapport cyclique du signal de préexcitation à une valeur de 4,5% et sinon à la conserver à le rapport cyclique du signal de préexcitation à 12,5%. Ensuite, le procédé recommence à mesurer le PWM et le comparer à 15%. Le troisième bloc consiste à quitter l'état préexcitation et effectuer une régulation normale de la tension de la batterie.

L'invention vise notamment à pallier ce type de problème.

L'invention a ainsi pour objet un procédé de protection d'une source de stockage d'énergie, notamment une batterie d'un véhicule automobile, contre une éventuelle surcharge provoquée par une application prolongée d'une tension électrique à la source de stockage d'énergie, cette tension étant générée au moins partiellement par une machine électrique tournante telle qu'un alternateur ou un alterno-démarreur, le procédé comportant les étapes suivante consistant à:
- permettre une mesure d'un niveau de charge de la source de stockage d'énergie, ce niveau de charge étant par exemple représenté par une tension mesurée aux bornes de la source de stockage d'énergie ou un signal PWM, tandis que la machine électrique tournante fonctionne dans un mode de fonctionnement prédéterminé et une excitation électrique lui est appliquée,
- comparer une valeur de cette mesure avec une valeur de référence,
- si la valeur mesurée pour la source de stockage d'énergie est supérieure à la valeur de référence, interrompre l'excitation appliquée à la machine électrique toumante,
le procédé étant caractérisé en ce que la valeur de référence (Max_SP) est choisie comme la plus grande d'une consigne interne (REF_INT) et d'une consigne externe (REF_EXT).

L'invention permet ainsi de surveiller la tension aux bornes de la source de stockage d'énergie et de la protéger contre une surcharge éventuelle, notamment dans le mode de fonctionnement de pré-excitation.

Pendant ledit mode de fonctionnement prédéterminé, l'excitation appliquée à la machine électrique tournante est, si on le souhaite, sensiblement constante.

De préférence le mode de fonctionnement prédéterminé correspond à un mode de pré-excitation de la machine électrique tournante.

Dans un exemple de mise en oeuvre de l'invention, l'excitation appliquée à la machine électrique tournante pendant ce mode de fonctionnement correspond à un rapport cyclique choisi entre 5% et 20%, étant notamment proche de 12.5%.

L'une des consignes provient notamment du contrôle moteur du véhicule.

L'autre des consignes est notamment générée en interne dans le régulateur seulement si le contrôle moteur n'envoie aucune consigne.

L'excitation électrique appliquée à la machine électrique tournante est avantageusement délivrée par un régulateur, et la première des deux valeurs de consigne est fournie extérieurement au régulateur, notamment par un système de contrôle moteur du véhicule, et transmis à ce régulateur, et la deuxième de ces valeurs de consigne est générée en interne par le régulateur.

L'invention a également pour objet un régulateur pour machine électrique tournante telle qu'un alternateur ou un alterno-démarreur, ce régulateur comportant :
- un bloc tel qu'un bloc logique apte à recevoir au moins une information représentative d'un niveau de charge d'une source de stockage d'énergie, une valeur de référence et une information représentative d'un mode de fonctionnement de la machine électrique tournante choisi parmi une pluralité de modes de fonctionnement, et agencé pour permettre une comparaison de l'information représentative d'un niveau de charge de la source de stockage d'énergie avec la valeur de référence au moins lorsque la machine électrique tournante fonctionne dans un mode prédéterminé détecté par le bloc,
- un contrôleur de champ agencé pour recevoir un ordre du bloc logique pour provoquer l'interruption d'une excitation appliquée à la machine électrique tournante lorsque le bloc détecte, suite à ladite comparaison, un niveau de charge excessif de la source de stockage d'énergie durant ce mode de fonctionnement,
caractérisé en ce qu'il comprend un bloc de détection de consigne maximum, notamment de type numérique, agencé pour générer ladite valeur de référence choisie comme le maximum d'une consigne interne et d'une consigne externe détectées par ce bloc de détection.

Le régulateur est de préférence agencé pour recevoir et traiter au moins une information représentative de la vitesse de rotation du rotor de la machine électrique tournante.

Dans un exemple de mise en oeuvre de l'invention, le régulateur est agencé pour imposer à la machine électrique tournante, parmi une pluralité de modes de fonctionnement, un mode de fonctionnement en pré-excitation durant lequel une excitation électrique correspondant à un rapport cyclique prédéterminé, notamment maintenu constant pendant ce mode de fonctionnement, par exemple sensiblement égal à 12.5%, est appliquée à la machine électrique tournante.

Le régulateur est, le cas échéant, agencé de manière à permettre, dans un fonctionnement non-défaillant, la réception de l'information représentative de la vitesse de rotation du rotor de la machine électrique tournante pendant le mode de fonctionnement en pré-excitation de la machine électrique tournante.

L'invention pourra être mieux comprise à la lecture de la description détaillée qui va suivre, d'un exemple de mise en oeuvre non limitatif de l'invention, et à l'examen de la figure unique annexée.

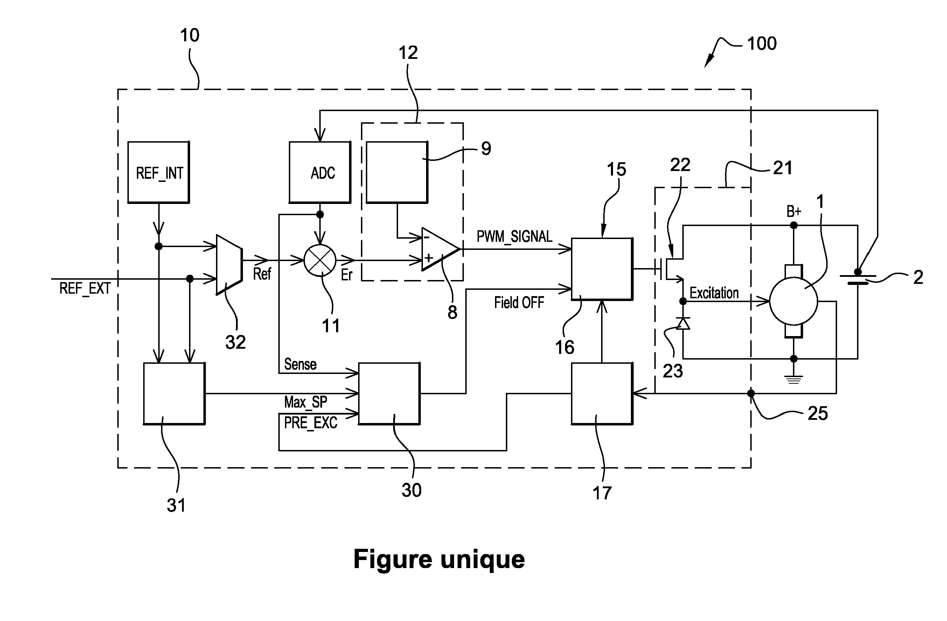

On a représenté sur la figure 1 un ensemble 100 pour véhicule automobile comportant une machine électrique tournante polyphasée 1 formée, dans l'exemple considéré, par un alternateur.

Cet alternateur 1 est capable d'être entraîné en rotation par un moteur à combustion interne du véhicule automobile pour produire de l'énergie électrique.

De manière connue en soi, l'alternateur 1 comporte, d'une part, un stator comprenant des enroulements formant dans l'exemple décrit trois phases, et d'autre part, un rotor comprenant un enroulement d'excitation.

En variante, la machine 1 peut être un alterno-démarreur.

L'alternateur 1 est relié à une batterie 2 embarquée sur le véhicule.

L'ensemble 100 comprend en outre un régulateur 10 de l'alternateur 1, lequel régulateur 10 est capable de fournir un courant électrique dont l'intensité varie en fonction de signaux ou impulsions d'excitation.

Le régulateur 10 comporte un amplificateur différentiel 11 agencé pour délivrer une information d'erreur Er représentative de la différence entre une consigne Ref et une valeur de tension, convertie par le bloc ADC de l'analogique vers du numérique, à une borne B+ de l'alternateur 1 reliée à la batterie 2.

Le régulateur 10 comprend en outre un générateur de signaux d'excitation 12 agencé pour délivrer des signaux d'excitation PWM_SIGNAL dont le rapport cyclique varie notamment en fonction de l'information d'erreur Er fournie par l'amplificateur différentiel 11.

Le générateur 12 est, dans l'exemple décrit, de type à modulation de largeur d'impulsions ou PWM (en anglais *Pulse Width Modulation*), pouvant comporter un comparateur 8 et un générateur 9 de signaux en dent de scie.

Le régulateur 10 comporte un module de commande 15 capable de commander l'excitation électrique appliquée à la machine électrique tournante 1 suivant un état de fonctionnement choisi parmi une pluralité d'états de fonctionnement prédéterminés.

Ce module 15 comprend une unité de contrôle de l'excitation 16 et une machine d'états 17 capable de commander l'unité 16.

La machine d'états 17 mémorise différents états de fonctionnement pouvant être appliqués à l'alternateur 1.

Ces états correspondent par exemple aux :
- Mode d'arrêt appelé mode STAND_BY dans lequel l'excitation du rotor est maintenue, en termes de rapport cyclique, à 0%,
- Mode de temporisation appelé mode TIMER dans lequel l'excitation est coupée pendant un temps prédéterminé, par exemple pendant 5 secondes, au démarrage,
- Mode de pré-excitation du rotor PRE_EXC pendant lequel le rapport cyclique est maintenu à environ 12.5% par exemple,
- Mode de réponse progressive appelé mode LRC pendant lequel le rapport cyclique varie entre 0 et 100%,
- Mode normal de régulation appelé mode NORMAL pendant lequel le rapport cyclique varie en fonction de la charge de la batterie notamment,
- Mode de régulation de phase.

Un étage de puissance 21 en aval du module 15 est connecté à l'alternateur 1 pour commander celui-ci en délivrant l'excitation sur le rotor de la machine, en fonction de signaux d'excitation fournis par le module de commande 15.

Cet étage de puissance 21 comporte un transistor 22 de type MOSFET et une diode de roue libre 23.

Le régulateur 10 est agencé pour recevoir et traiter au moins une information représentative de la vitesse de rotation du rotor de la machine électrique tournante 1.

Une vis de phase 25 est prévue pour permettre une connexion mécanique et une liaison électrique entre des phases du stator et le régulateur

Le régulateur comporte en outre un bloc logique 30 apte à recevoir au moins une information SENSE représentative d'un niveau de charge de la batterie 2, une valeur de référence Max_SP et une information représentative d'un mode de fonctionnement de la machine électrique tournante choisi parmi la pluralité de modes de fonctionnement, et agencé pour permettre une comparaison de l'information SENSE représentative d'un niveau de charge de la batterie 2 avec la valeur de référence Max_SP lorsque la machine électrique tournante fonctionne dans le mode prédéterminé PRE_EXC détecté par le bloc logique 30.

L unité de contrôle de l'excitation 16, ou encore appelée contrôleur de champ, est agencée pour recevoir un ordre du bloc logique 30 pour provoquer l'interruption d'une excitation appliquée à la machine électrique tournante 1 lorsque le bloc logique 30 détecte, suite à la comparaison ci-dessus, un niveau de charge excessif de la batterie 2 durant le mode de fonctionnement PRE_EXC.

Le régulateur 10 comporte un bloc de détection de consigne maximum 31 de type numérique, agencé pour générer ladite valeur de référence Max_SP choisie comme le maximum d'une consigne interne REF_INT et d'une consigne externe REF_EXT détectées par ce bloc de détection 31

Le régulateur 10 comprend en outre un sélecteur 32 pourvu par exemple d'un multiplexeur, agencé pour sélectionner l'une des valeurs de consigne REF_INT et REF_EXT et transmettre la valeur sélectionnée vers l'amplificateur différentiel 11 comme étant la consigne REF.

## Revendications

1. Procédé de protection d'une source de stockage d'énergie (2), notamment une batterie d'un véhicule automobile, contre une éventuelle surcharge provoquée par une application prolongée d'une tension électrique à la source de stockage d'énergie, cette tension étant générée au moins partiellement par une machine électrique tournante (1) telle qu'un alternateur ou un alterno-démarreur, le procédé comportant les étapes suivantes consistant à:
- permettre une mesure d'un niveau de charge de la source de stockage d'énergie, ce niveau de charge étant par exemple représenté par une tension mesurée aux bornes de la source de stockage d'énergie ou un signal PWM, tandis que la machine électrique tournante fonctionne dans un mode de fonctionnement prédéterminé et une excitation électrique lui est appliquée,
- comparer une valeur (SENSE) de cette mesure avec une valeur de référence (Max_SP),
- si la valeur mesurée pour la source de stockage d'énergie est supérieure à la valeur de référence, interrompre l'excitation appliquée à la machine électrique tournante,
le procédé étant **caractérisé en ce que** la valeur de référence (Max_SP) est choisie comme la plus grande d'une consigne interne (REF_INT) et d'une consigne externe (REF_EXT). Z

2. Procédé selon la revendication précédente, **caractérisé par le fait que**, pendant ledit mode fonctionnement prédéterminé, l'excitation appliquée à la machine électrique tournante (1) est sensiblement constante.

3. Procédé selon la revendication précédente, **caractérisé par le fait que** le mode de fonctionnement prédéterminé correspond à un mode de pré-excitation (PRE_EXC) de la machine électrique tournante.

4. Procédé selon l'une des deux revendications précédentes, **caractérisé par le fait que** l'excitation appliquée à la machine électrique tournante pendant ce mode de fonctionnement correspond à un rapport cyclique choisi entre 5% et 20%, étant notamment proche de 12.5%.

5. Procédé selon la revendication 1, **caractérisé par le fait que** l'excitation électrique appliquée à la machine électrique tournante est délivrée par un régulateur, et **par le fait que** la première (REF_EXT) des deux valeurs de consigne est fournie extérieurement au régulateur, notamment par un système de contrôle moteur du véhicule, et transmis à ce régulateur, et la deuxième (REF_INT) de ces valeurs de consigne est générée en interne par le régulateur.

6. Régulateur pour machine électrique tournante telle qu'un alternateur ou un alterno-démarreur, ce régulateur comportant :
- un bloc tel qu'un bloc logique (30) apte à recevoir au moins une information représentative d'un niveau de charge d'une source de stockage d'énergie, une valeur de référence et une information représentative d'un mode de fonctionnement de la machine électrique tournante choisi parmi une pluralité de modes de fonctionnement, et agencé pour permettre une comparaison de l'information représentative d'un niveau de charge de la source de stockage d'énergie avec la valeur de référence au moins lorsque la machine électrique tournante fonctionne dans un mode prédéterminé détecté par le bloc tel que le bloc logique,
- un contrôleur de champ (15) agencé pour recevoir un ordre du bloc logique pour provoquer l'interruption d'une excitation appliquée à la machine électrique tournante lorsque le bloc (30) détecte, suite à ladite comparaison, un niveau de charge excessif de la source de stockage d'énergie durant ce mode de fonctionnement,
**caractérisé en ce qu'**il comprend en outre :
- un bloc de détection de consigne maximum (31), notamment de type numérique, agencé pour générer ladite valeur de référence choisie comme le maximum d'une consigne interne et d'une consigne externe détectées par ce bloc de detection.

7. Régulateur selon l'une des deux revendications précédentes, **caractérisé par le fait qu'**il est agencé pour recevoir et traiter au moins une information représentative de la vitesse de rotation du rotor de la machine électrique tournante.

8. Régulateur selon l'une quelconque des revendications 6 et 7, **caractérisé par le fait qu'**il est agencé pour imposer à la machine électrique tournante, parmi une pluralité de modes de fonctionnement, un mode de fonctionnement en pré-excitation durant lequel une excitation électrique correspondant à un rapport cyclique prédéterminé, notamment maintenu constant pendant ce mode de fonctionnement, par exemple sensiblement égal à 12.5%, est appliquée à la machine électrique tournante.

9. Régulateur selon l'une des deux revendications précédentes, **caractérisé par le fait qu'**il est agencé de manière à permettre, dans un fonctionnement non-défaillant, la réception de l'information représentative de la vitesse de rotation du rotor de la machine électrique tournante pendant le mode de fonctionnement en pré-excitation de la machine électrique tournante.

## Patentansprüche

1. Verfahren zum Schützen einer Energiespeicherquelle (2), insbesondere einer Batterie eines Kraftfahrzeugs, vor einer eventuellen Überladung, die durch ein verlängertes Anlegen einer elektrischen Spannung an die Energiespeicherquelle hervorgerufen wird, wobei diese Spannung wenigstens teilweise durch eine rotierende elektrische Maschine (1) wie etwa einen Wechselstromgenerator oder einen Starter-Generator erzeugt wird, wobei das Verfahren die folgenden Schritte umfasst, die darin bestehen:
- eine Messung eines Ladungspegels der Energiespeicherquelle zu ermöglichen, wobei dieser Ladungspegel beispielsweise durch eine Spannung repräsentiert wird, die an den Anschlüssen der Energiespeicherquelle gemessen wird, oder durch ein PWM-Signal repräsentiert wird, während die rotierende elektrische Maschine in einer vorgegebenen Betriebsart arbeitet und an sie eine elektrische Anregung angelegt ist,
- einen Wert (SENSE) dieser Messung mit einem Referenzwert (Max_SP) zu vergleichen und
- dann, wenn der für die Energiespeicherquelle gemessene Wert größer als der Referenzwert ist, die an die rotierende elektrische Maschine angelegte Anregung zu unterbrechen,
wobei das Verfahren **dadurch gekennzeichnet ist, dass** der Referenzwert (Max_SP) als der größte Wert eines internen Sollwerts (REF_INT) und eines externen Sollwerts (REF_EXT) gewählt wird.

2. Verfahren nach dem vorhergehenden Anspruch, **dadurch gekennzeichnet, dass** während der vorgegebenen Betriebsart die an die rotierende elektrische Maschine (1) angelegte Anregung im Wesentlichen konstant ist.

3. Verfahren nach dem vorhergehenden Anspruch, **dadurch gekennzeichnet, dass** die vorgegebene Betriebsart einer Voranregungsbetriebsart (PRE_EXC) der rotierenden elektrischen Maschine entspricht.

4. Verfahren nach einem der vorhergehenden Ansprüche, **dadurch gekennzeichnet, dass** die an die rotierende elektrische Maschine angelegte Anregung während dieser Betriebsart einem Tastverhältnis entspricht, das zwischen 5 % und 20 % gewählt ist und insbesondere in der Nähe von 12,5 % liegt.

5. Verfahren nach Anspruch 1, **dadurch gekennzeichnet, dass** die an die rotierende elektrische Maschine angelegte elektrische Anregung von einem Regulierer geliefert wird und dass der erste (REF_EXT) der beiden Sollwerte von außerhalb des Regulierers geliefert wird, insbesondere von einem Motor-Controller des Fahrzeugs, und an diesen Regulierer übertragen wird und der zweite (REF_INT) dieser Sollwerte innerhalb des Regulierers erzeugt wird.

6. Regulierer für rotierende elektrische Maschine wie etwa einen Wechselstromgenerator oder einen Starter-Generator, wobei dieser Regulierer Folgendes umfasst:
- einen Block wie etwa einen Logikblock (30), der wenigstens Informationen, die einen Ladungspegel einer Energiespeicherquelle repräsentieren, einen Referenzwert und Informationen, die eine unter mehreren Betriebsarten gewählte Betriebsart der rotierenden elektrischen Maschine repräsentieren, empfangen kann und dafür ausgelegt ist, einen Vergleich der Informationen, die einen Ladungspegel der Energiespeicherquelle repräsentieren, mit dem Referenzwert wenigstens dann zu ermöglichen, wenn die rotierende elektrische Maschine in einer vorgegebenen Betriebsart arbeitet, die durch den Block wie etwa den Logikblock detektiert wird,
- einen Feld-Controller (15), der dafür ausgelegt ist, von dem Logikblock einen Befehl zu empfangen, um die Unterbrechung einer an die rotierende elektrische Maschine angelegten Anregung hervorzurufen, wenn der Block (30) infolge des Vergleichs einen übermäßigen Ladungspegel der Energiespeicherquelle während dieser Betriebsart detektiert,
**dadurch gekennzeichnet, dass** er außerdem Folgendes umfasst:
- einen Block (31) zum Detektieren eines maximalen Sollwerts, insbesondere des digitalen Typs, der dafür ausgelegt ist, den gewählten Referenzwert als den größten Wert eines internen Sollwerts und eines externen Sollwerts, die durch diesen Detektionsblock detektiert werden, zu erzeugen.

7. Regulierer nach einem der vorhergehenden Ansprüche, **dadurch gekennzeichnet, dass** er dafür ausgelegt ist, wenigstens Informationen, die die Drehzahl des Rotors der rotierenden elektrischen Maschine repräsentieren, zu empfangen und zu verarbeiten.

8. Regulierer nach einem der Ansprüche 6 und 7, **dadurch gekennzeichnet, dass** er dafür ausgelegt ist, der rotierenden elektrischen Maschine unter mehreren Betriebsarten eine Betriebsart mit Voranregung zuzuweisen, während derer eine elektrische Anregung, die einem vorgegebenen Tastverhältnis entspricht, das insbesondere während dieser Betriebsart konstant gehalten wird, beispielsweise im Wesentlichen gleich 12,5 %, an die rotierende elektrische Maschine angelegt wird.

9. Regulierer nach einem der vorhergehenden Ansprüche, **dadurch gekennzeichnet, dass** er so beschaffen ist, dass er bei fehlerfreier Funktion den Empfang der Informationen, die die Drehzahl des Rotors der rotierenden elektrischen Maschine während der Voranregungsbetriebsart der rotierenden elektrischen Maschine repräsentieren, ermöglicht.

## Claims

1. Method for protecting an energy storage source (2), notably a motor vehicle battery, against a possible overload provoked by a prolonged application of an electric voltage to the energy storage source, this voltage being generated at least partially by a rotating electrical machine (1) such as an alternator or an alternator-starter, the method comprising the following steps consisting in:
- allowing for a measurement of a level of charge of the energy storage source, this level of charge being for example represented by a voltage measured at the terminals of the energy storage source or a PWM signal, while the rotating electrical machine operates in a predetermined operating mode and electrical excitation is applied to it,
- comparing a value (SENSE) of this measurement with a reference value (Max_SP),
- if the value measured for the energy storage source is greater than the reference value, interrupting the excitation applied to the rotating electrical machine
the method being **characterized in that** the reference value (Max_SP) is chosen as the greater of an internal set point (REF_INT) and an external set point (REF_EXT).

2. Method according to the preceding claim, **characterized in that**, during said predetermined operating mode, the excitation applied to the rotating electrical machine (1) is substantially constant.

3. Method according to the preceding claim, **characterized in that** the predetermined operating mode corresponds to a pre-excitation mode (PRE_EXC) of the rotating electrical machine.

4. Method according to one of the two preceding claims, **characterized in that** the excitation applied to the rotating electrical machine during this operating mode corresponds to a duty cycle chosen between 5% and 20%, being notably close to 12.5%.

5. Method according to Claim 1, **characterized in that** the electrical excitation applied to the rotating electrical machine is delivered by a regulator, and **in that** the first (REF_EXT) of the two set point values is supplied externally to the regulator, notably by a vehicle engine control system, and transmitted to this regulator, and the second (REF_INT) of these set point values is generated internally by the regulator.

6. Regulator for a rotating electrical machine such as an alternator or an alternator-starter, this regulator comprising:
- a block such as a logic block (30) suitable for receiving at least one information item representative of a level of charge of an energy storage source, a reference value and an information item representative of operating mode of the rotating electrical machine chosen from a plurality of operating modes, and arranged to allow for a comparison of the information item representative of a level of charge of the energy storage source with the reference value at least when the rotating electrical machine is operating in a predetermined mode detected by the block such as the logic block,
- a field controller (15) arranged to receive an order from the logic block to provoke the interruption of an excitation applied to the rotating electrical machine when the block (30) detects, following said comparison, an excessive level of charge of the energy storage source during this operating mode,
**characterized in that** it further comprises:
- a block for detecting a maximum set point (31), notably of digital type, arranged to generate said reference value chosen as the maximum of an internal set point and of an external set point detected by this detection block.

7. Regulator according to one of the two preceding claims, **characterized in that** it is arranged to receive and process at least one information item representative of the speed of rotation of the rotor of the rotating electrical machine.

8. Regulator according to either one of Claims 6 and 7, **characterized in that** it is arranged to impose on the rotating electrical machine, out of a plurality of operating modes, a pre-excitation operating mode during which an electrical excitation corresponding to a predetermined duty cycle, notably maintained constant during this operating mode, for example substantially equal to 12.5%, is applied to the rotating electrical machine.

9. Regulator according to one of the two preceding claims, **characterized in that** it is arranged so as to allow, in non-failing operation, the reception of the information item representative of the speed of rotation of the rotor of the rotating electrical machine during the pre-excitation operating mode of the rotating electrical machine.
